# EUROPÄISCHE PATENTSCHRIFT

(11) **EP 0 410 192 B1**
(45) Veröffentlichungstag und Bekanntmachung des Hinweises auf die Patenterteilung: **15.11.1995**
(21) Anmeldenummer: 90113034.4
(22) Anmeldetag: 07.07.1990
(51) Int. Cl.: H04N 7/12, G06T 7/20

(54) **Schaltungsanordnung zur Schätzung von Bewegung in einem aufgenommenen Bild**
Circuit for estimation of motion in a captured image
Circuit d'estimation de mouvement dans une image captée

(30) Priorität: 25.07.1989 DE 3924541
(43) Veröffentlichungstag der Anmeldung: 30.01.1991
(73) Patentinhaber: ROBERT BOSCH GMBH, 70442 Stuttgart (DE)
(72) Erfinder: Amor, Hamed, Dr., D-3200 Hildesheim (DE); Gerken, Peter, D-2743 Farven (DE)
(74) Vertreter: Friedmann, Jürgen, Dr.-Ing.

(56) Entgegenhaltungen:
- EP-A- 0 181 215
- EP-A- 0 293 644
- GB-A- 2 153 625
- US-A- 4 691 230
- US-A- 4 717 956

## Beschreibung

Die Erfindung geht aus von einer Schaltungsanordnung nach der Gattung des unabhängigen Anspruchs 1.

Zur Übertragung von bewegten Bildern, beispielsweise beim Schmalband-Bildtelefon, sind verschiedene datenreduzierende Codierverfahren bekannt geworden. Eine wesentliche Datenreduzierung wird durch eine DPCM in der Zeitebene verbunden mit einer diskreten Cosinus-Transformation in der Ortsebene erzielt. Bei der diskreten Cosinus-Transformation werden die zu übertragenden Videosignale blockweise codiert, wobei ein Block beispielsweise aus 16 mal 16 Bildelementen besteht. Eine weitere Reduzierung der zu übertragenen Datenmenge kann dadurch erreicht werden, daß beim Auslesen der Daten aus dem für die DPCM erforderlichen Prädiktionsspeicher eine im Bild stattgefundene Bewegung berücksichtigt wird. Es wird für jeweils einen Block ein Bewegungsvektor ermittelt, welcher der Größe und Richtung der Bewegung dieses Blocks im Verhältnis zu einem vergleichbaren Block des vorangegangenen Bildes im wesentlichen entspricht.

Für die Ermittlung des Bewegungsvektors sind verschiedene Algorithmen bekannt. So ist beispielsweise eine Drei-Schritt-Suche durch T. Koga, K. Linuma, A. Hirano, Y. Iijima, A. Ishiguro, "Motion-Compensated Interframe Coding for Video Conferencing," Proc. NTC `81, New Orleans, LA, pp. G 5.3.1 - G 5.3.5, Dez. 1981 bekannt geworden. Dabei wird in einem ersten Suchschritt der Block im Verhältnis zu dem Vergleichsblock des vorangegangenen Bildes um einen relativ großen Versatz (Vektor) nach oben, unten, rechts, links und diagonal mit dem Vergleichsblock verglichen. Derjenige Vektor, bei welchem der Vergleichsblock und der Block am wenigsten voneinander abweichen, dient als Ausgangspunkt für den nächsten Suchschritt, bei welchem um diesen Punkt herum mit einer kleineren Schrittweite gesucht wird. Das Ergebnis dieses zweiten Suchschritts wird dann wiederum für den dritten Suchschritt verwendet, dessen Ergebnis den Bewegungsvektor, auch Displacement genannt, darstellt. Diese Drei-Schritt-Suche erfordert eine große Anzahl von Rechenoperationen.

Ein weiterer Algorithmus ist bekannt geworden durch M. Bierling, "Displacement Estimation by Hierarchical Blockmatching," Proc. 3rd SPIE Conf. Vis. Commun. Im. Proc., Cambridge, MA, pp. 942-951, Nov. 1988. Eine dort vorgeschlagene Suche innerhalb von zwei Hierarchiestufen erfolgt derart, daß zunächst ein grober Vergleich mit tiefpaßgefilterten Signalen durchgeführt wird, wobei in dieser ersten Hierarchiestufe drei Suchschritte hintereinander angewendet werden. Mit breitbandigeren Videosignalen werden in einer zweiten Hierarchiestufe zwei Suchschritte durchgeführt.

Durch die Einführung einer Hierarchie bei dem weiteren bekannten Verfahren ist gegenüber der Drei-Schritt-Suche die Anzahl der Fehlschätzungen bezüglich der physikalisch richtigen Bewegung erheblich vermindert. Der Rechenaufwand ist jedoch bei dem weiteren bekannten Verfahren gegenüber der Drei-Schritt-Suche nicht reduziert.

Aufgabe der vorliegenden Erfindung ist es, eine Schaltungsanordnung anzugeben, bei welcher mit möglichst geringem Rechenaufwand eine zuverlässige Bewegungsschätzung möglich ist.

Die erfindungsgemäße Schaltungsanordnung mit den kennzeichnenden Merkmalen hat den Vorteil, daß insgesamt lediglich drei Suchschritte auszuführen sind und daß gleichzeitig die mit der Hierarchiesuche verbundene sichere Schätzung möglich ist.

Durch die in den abhängigen Ansprüchen aufgeführten Maßnahmen sind vorteilhafte Weiterbildungen und Verbesserungen der im unabhängigen Anspruch 1 angegebenen Erfindung möglich.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild eines an sich bekannten Hybrid-DCT-Coders, bei welchem die erfindungsgemäße Schaltungsanordnung in vorteilhafter Weise angewendet werden kann,
- Fig. 2: eine schematische Darstellung zur Erläuterung der Drei-Schritt-Suche,
- Fig. 3: eine schematische Darstellung zur Erläuterung der hierarchischen Suche gemäß dem weiteren bekannten Verfahren,
- Fig. 4: eine schematische Darstellung des Such-Algorithmus bei der erfindungsgemäßen Schaltungsanordnung und
- Fig. 5: ein Blockschaltbild eines Ausführungsbeispiels der erfindungsgemäßen Schaltungsanordnung und
- Fig. 6: ein Struktogramm.

Gleiche Teile sind in den Figuren mit gleichen Bezugszeichen versehen. Für Bewegung wird im Zusammenhang mit den Figuren der international gebräuchliche Ausdruck Displacement verwendet.

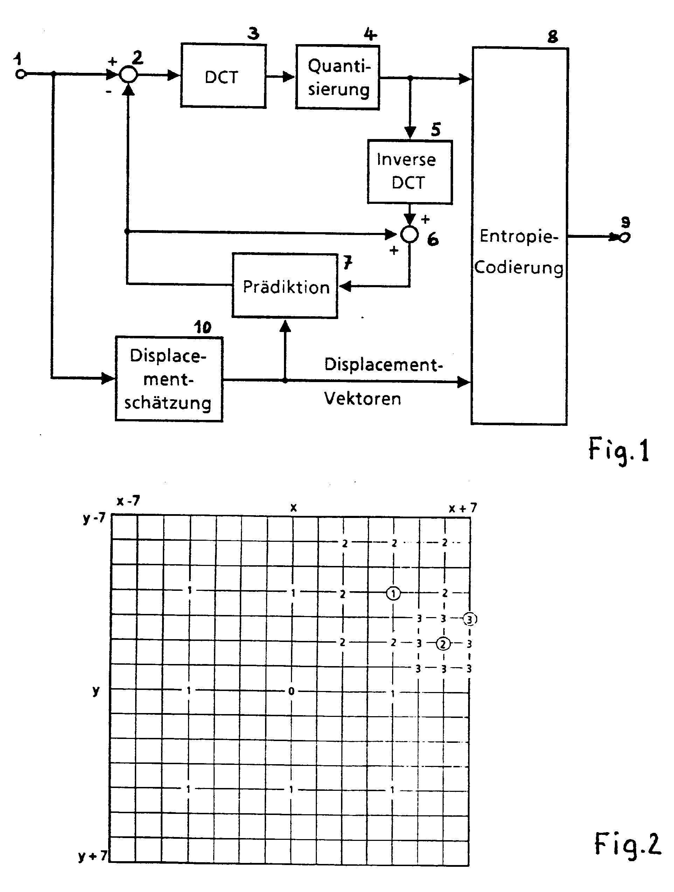

Der in Fig. 1 dargestellte Hybrid-DCT-Coder ist vorzugsweise für die Verwendung in einem Schmalband-Bildtelefon vorgesehen. Über einen Eingang 1 werden die von einer nicht dargestellten Videokamera erzeugten Videosignale einer DPCM-Schleife zugeführt, welche in an sich bekannter Weise aus einem Subtrahierer 2, einer Schaltung 3 zur diskreten Cosinus-Transformation, einem Quantisierer 4, einer Schaltung zur inversen diskreten Cosinus-Transformation 5, einem Addierer 6 und einem Prädiktor 7 besteht. Der Prädiktor 7 wird im wesentlichen von einem Bildspeicher gebildet. Das Ausgangssignal des Quantisierers 4 wird ferner einem Entropie-Coder 8 zugeführt, dessen Ausgang 9 mit einem Übertragungskanal verbunden ist. Mit dem in Fig. 1 dargestellten Coder werden die Videosignale blockweise codiert, wobei ein Block beispielsweise die Größe von 8 X 8 Bildelementen aufweist.

Neben anderen Einflüssen hängt der Umfang der Datenreduzierung von der Genauigkeit der Prädiktion in der DPCM-Schleife ab. Um eine genauere Prädiktion auch bei bewegten Bildern zu erhalten, ist ein Bewegungsschätzer 10 vorgesehen, der durch Vergleich aufeinanderfolgender Bilder jeweils für einen Block einen Displacementvektor erzeugt.

Dazu werden dem Bewegungsschätzer 10 vom Eingang 1 die Videosignale zugeführt. Die Displacementvektoren werden einer im einzelnen nicht dargestellten Adressierschaltung für den im Prädiktor 7 vorhandenen Bildspeicher zugeleitet, so daß beim blockweisen Lesen der Signale aus dem Bildspeicher bereits eine durch Bewegung verursachte Verschiebung des Inhalts des jeweiligen Blocks zwischen dem gespeicherten und dem jeweils aktuellen Bild berücksichtigt wird. Um nach der Übertragung eine Decodierung unter Berücksichtigung der Bewegung zu ermöglichen, werden die Displacementvektoren nach entsprechender Codierung im Entropie-Coder 8 ebenfalls über den Übertragungskanal geleitet. Eine Schaltung für einen Bewegungsschätzer ist in der Patentanmeldung DE-A-38 34 477 der Anmelderin im einzelnen beschrieben, so daß im Rahmen der vorliegenden Anmeldung auf Schaltungseinzelheiten nicht eingegangen zu werden braucht.

Fig. 2 stellt in schematischer Weise die Drei-Schritt-Suche dar, wobei die Vektoren den Wertebereich zwischen x-7 und x+7 sowie zwischen y-7 und y+7 einnehmen können, wobei x und y Koordinaten sind, die das jeweilige Suchfeld im gesamten Bild kennzeichnen. Bei diesem Punkt (in Fig. 2 mit 0 bezeichnet) beginnt die Suche, wobei in einem ersten Schritt ein Vergleich zwischen Blöcken zweier aufeinanderfolgender Bilder im Initialsuchpunkt 0 und an den in Fig. 2 jeweils mit 1 gekennzeichneten Suchpunkten erfolgt. Aus den an den einzelnen Suchpunkten festgestellten Abweichungen zwischen den Blöcken aufeinanderfolgender Bilder wird das Minimum ausgewählt. Diese sogenannten "best matches" sind in Fig. 2 beispielhaft durch Kreise hervorgehoben. Nach dem ersten Suchschritt ist dieses der Displacementvektor (4, -4). Der zweite Suchschritt erfolgt ausgehend von diesem Displacementvektor an den mit 2 bezeichneten Punkten. Nachdem dort der Displacementvektor (6, -2) für die geringste Abweichung gefunden wurde, erfolgt ein dritter Suchschritt an den mit 3 bezeichneten Punkten mit dem Ergebnis, daß die geringste Abweichung bei dem Displacementvektor (7, -3) liegt. Dieser wird als Displacementvektor an den Prädiktor 7 und an den Entropie-Coder 8 ausgegeben.

Je nach Art des Bildinhalts und der Bewegung im einzelnen kann es vorkommen, daß der erste Suchschritt in eine Richtung führt, in welcher dann auch ein relatives Minimum gefunden wird, obwohl im Bereich der anderen im ersten Suchschritt angewandten Displacementvektoren eine wesentlich bessere Übereinstimmung zwischen den Blöcken aufeinanderfolgender Bilder zu finden gewesen wäre. Somit ergeben sich bei der Suche in mehreren Schritten Fehlschätzungen.

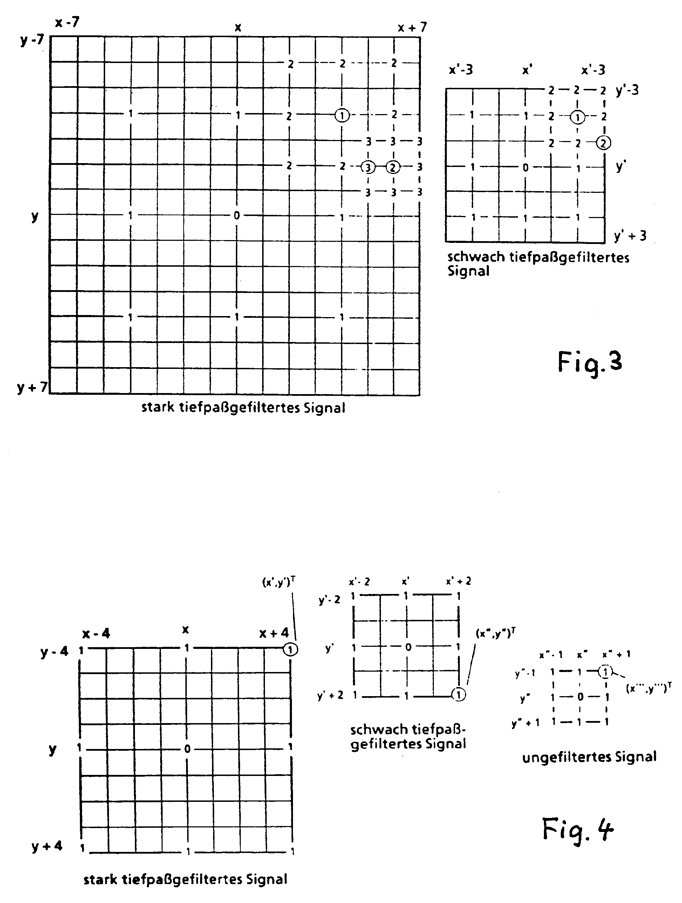

Die Anzahl der Fehlschätzungen kann bei dem weiteren bekannten Verfahren nach Bierling erheblich vermindert werden. Wie in Fig. 3 dargestellt, werden mit einem tiefpaßgefilterten Signal drei Suchschritte wie bei der Drei-Schritt-Suche gemäß Fig. 2 ausgeführt. Durch die Tiefpaßfilterung wird vermieden, daß durch quasi zufällige Abweichungen in einem vorangegangenen Schritt im nachfolgenden Suchschritt ein Bereich abgesucht wird, in dem nicht das wirkliche Minimum liegt. Zeigt beispielsweise ein Vergleich bei einem Displacementvektor (-4, -4) auch nur eine geringfügig größere Abweichung als ein Vergleich bei dem Displacementvektor (4, -4), so wird bei der nicht hierarchischen Drei-Schritt-Suche die Suche beim Punkt (4, -4) fortgesetzt, selbst wenn beispielsweise beim Punkt (-5, -4) ein eindeutiges Minimum liegt.

Durch die Tiefpaßfilterung wird jedoch über benachbarte Bildelemente gemittelt, so daß in dem angenommenen Beispiel wegen des Minimums bei (-5, -4) bei dem Punkt (4, -4) die Abweichung geringer als bei einem breitbandigen Videosignal ist. Durch diese Mittelung geben sich jedoch nicht so eindeutige Minima wie bei dem breitbandigen Videosignal, so daß bei dem in Fig. 3 erläuterten Verfahren in einer zweiten Hierarchiestufe mit dem breitbandigen Signal unter Berücksichtigung des Ergebnisses der ersten Hierarchiestufe eine weitere Suche erfolgt, die aus zwei weiteren Suchschritten besteht.

Bei der erfindungsgemäßen Schaltungsanordnung wird ein Such-Algorithmus mit drei Hierarchiestufen angewendet, wobei jeweils nur ein Suchschritt durchgeführt wird. Dieses ist in Fig. 4 schematisch dargestellt. Die Videosignale werden mit zwei verschiedenen Bandbreiten tiefpaßgefiltert, im folgenden stark und schwach tiefpaßgefilterte Signale genannt. Das stark tiefpaßgefilterte Signal ist Gegenstand einer Suche am Initialsuchpunkt 0 und an den in Fig. 4a mit 1 bezeichneten Punkten. Dabei sei angenommen, daß beim Punkt (4, -4) eine geringste Abweichung festgestellt ist. Dieses ist der Initialsuchpunkt 0 bei der zweiten Hierarchie (Fig. 4b) mit dem schwach tiefpaßgefilterten Signal. Hier wird an Punkten gesucht, die jeweils ± 2 Bildelemente horizontal, vertikal und diagonal versetzt sind. In dieser Hierarchiestufe findet die Suche beispielsweise bei dem Punkt (x˝, y˝) statt. Im Anschluß daran wird die Suche mit dem ungefilterten Signal mit jeweils einem Versatz von einem Bildelement fortgesetzt, bis der in Fig. 4c eingekreiste Punkt gefunden ist.

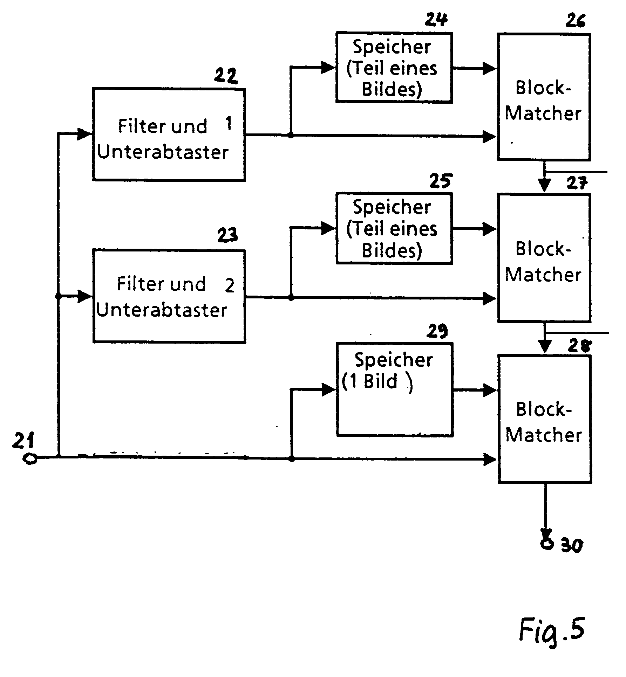

Fig. 5 zeigt ein Blockschaltbild einer erfindungsgemäßen Schaltungsanordnung, der bei 21 ein Videosignal zugeführt wird. Das stark tiefpaßgefilterte Signal wird mit Hilfe eines ersten Filters und Unterabtasters 22 abgeleitet, während das schwach tiefpaßgefilterte Signal mit Hilfe eines Filters und Unterabtasters 23 gewonnen wird. Durch die Unterabtastung werden nur diejenigen Abtastwerte weitergeleitet, die für den jeweiligen Suchschritt erforderlich sind.

An den Ausgängen der Schaltung 22 und 23 ist jeweils einerseits ein Speicher 24, 25 für je ein Suchfeld und andererseits ein Eingang eines sogenannten Blockmatchers 26, 27 angeschlossen, mit welchem die im Zusammenhang mit den Figuren 4a und 4b erläuterten Suchvorgänge durchgeführt werden. Dazu wird den Blockmatchern jeweils das um ein Bild verzögerte gefilterte Signal von den Ausgängen der Speicher 24, 25 zugeführt. Der im Blockmatcher 26 gewonnene Displacementvektor wird dem Blockmatcher 27 als Initialsuchpunkt zugeleitet. Ein nicht gefiltertes Videosignal wird dem dritten Blockmatcher 28 einerseits direkt und andererseits über einen Speicher 29 zugeführt. Damit wird die im Zusammenhang mit Fig. 4c erläuterte Suche durchgeführt und ein Displacementvektor am Ausgang 30 ausgegeben.

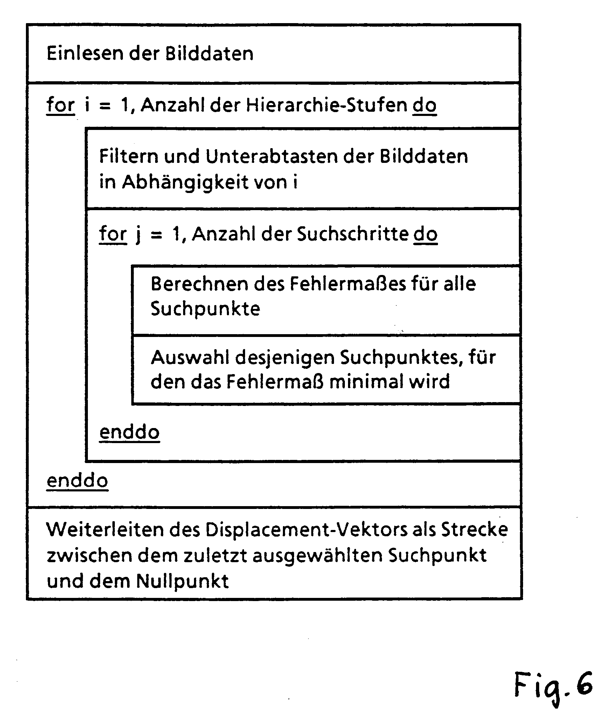

Zur weiteren Erläuterung der Erfindung ist in Fig. 6 ein vereinfachtes Struktogramm einer hierarischen Bewegungsschätzung angegeben. In Abhängigkeit von den jeweiligen Parametern verkörpert das Struktogramm das Verfahren nach Bierling oder das Verfahren mit der erfindungsgemäßen Schaltungsanordnung. Es stellt somit auch ein Programm dar, welches für einen Signalprozessor geeignet ist, der die Funktion der Schaltungsanordnung in Fig. 5 ausführt. Nach dem Einlesen der Bilddaten wird entsprechend der Anzahl der Hierarchiestufen das Filtern und Unterabtasten der Bilddaten in Abhängigkeit von i vorgenommen. Dabei wird jedes Mal die je nach Verfahren vorgegebene Anzahl j von Suchschritten vorgenommen. Jeder Suchschritt besteht aus dem Berechnen des Fehlermaßes für alle Suchpunkte und der Auswahl desjenigen Suchpunktes, für den das Fehlermaß minimal wird. Danach erfolgt der nächste Suchschritt, bis die Anzahl der Suchschritte erreicht ist, worauf die nächste Hierarchiestufe abgearbeitet wird.

Nach der letzten Hierarchiestufe wird schließlich der Displacementvektor als Strecke zwischen dem zuletzt ausgewählten Suchpunkt und dem Nullpunkt weitergeleitet. Bei dem Verfahren für die erfindungsgemäße Schaltungsanordnung ist die Anzahl der Hierarchiestufen drei, während die Anzahl der Suchschritte eins beträgt.

## Patentansprüche

1. Verfahren zur Schätzung von Bewegungen in einer Bilderfolge mit Bildspeichern für die bei der Aufnahme eines Bildes entstehenden Videosignale, die anschließend einer blockweisen datenreduzierenden Codierung mit mehreren Suchschritten unterworfen werden, wobei in jedem Suchschritt jeweils ein Block um verschiedene Vektoren versetzt wird und durch Vergleich mit Vergleichsblöcken in einem Suchfeld des vorangegangenen Bildes derjenige Vektor, der zur geringsten Abweichung führt, ermittelt wird, wobei die Videosignale für die hierarchische Suche mit verschiedener Bandbreite tiefpaßgefiltert werden und ein in einem tiefpaßgefilterten Videosignal einer Hierarchieebene ermittelter Vektor bei der Suche in dem Videosignal mit der nächstgrößeren Bandbreite der nächsthöheren Hierarchieebene als Ausgangspunkt verwendet wird und die Videosignale in einer tieferen Hierarchieebene mit einer geringeren Abtastrate unterabgetastet werden als in einer höheren Hierarchieebene, dadurch gekennzeichnet, daß der nach dem ersten Suchschritt mit einem tiefpaßgefilterten Videosignal ermittelte Vektor als Ausgangspunkt für die Suche in der nächsthöheren Hierarchieebene verwendet wird, und daß in der letzten Hierarchieebene der Suchschritt unter Verwendung des ungefilterten Videosignales durchgeführt wird.

2. Verfahren nach Anspruch 1, dadurch gekennzeichnet, daß bei einer Suche mit drei Videosignalen mit verschiedener Bandbreite bei dem Videosignal mit der geringsten Bandbreite eine Suche mit einem Versatz von +/- vier Bildelementen in vertikaler und/oder horizontaler Richtung erfolgt, daß bei den Vidosignalen mit mittlerer Bandbreite eine Suche mit einem Versatz von +/- zwei Bildelementen in horizontaler und/oder vertikaler Richtung erfolgt, und daß bei dem Videosignal mit der höchsten Bandbreite die Suche mit einem Versatz von +/- einem Bildelement in horizontaler und/oder vertikaler Richtung erfolgt.

3. Verfahren nach Anspruch 1 oder 2, dadurch gekennzeichnet, daß das Videosignal einer ersten und einer zweiten Tiefpaßfilter-Unterabtasterkombination mit unterschiedlicher Bandbreite und Abtastrate (22, 23) zugeführt wird, daß die Ausgänge der Tiefpaßfilter-Unterabtasterkommbination jeweils direkt und über einen ersten und einen zweiten Speicher (24, 25) einer ersten und einer zweiten Vergleichseinrichtung (26, 27) zugeführt werden, daß ein dritter Speicher (29) und eine dritte Vergleichseinrichtung (28) für das nichtgefilterte Videosignal vorgesehen sind, und daß ein Ausgang der ersten Vergleichseinrichtung (26) mit dem Eingang der zweiten Vergleichseinrichtung (27) und ein Ausgang der zweiten Vergleichseinrichtung (27) mit einem Eingang der dritten Vergleichseinrichtung (28) verbunden ist, und daß der Ausgang (30) der Schaltungsanordnung durch den Ausgang der dritten Vergleichseinrichtung (28) gebildet wird.

## Claims

1. Method of estimating motions in a sequence of images, with image memories for the video signals which are produced during the capture of an image and are subsequently subjected to a block-by-block data-reducing coding comprising a plurality of search steps, in each search step one block being respectively offset by various vectors and that vector which results in the least deviation being determined by comparison with comparison blocks in a search field of the preceding image, the video signals being low-pass filtered with different bandwidths for the hierarchical search and a vector determined in a low-pass-filtered video signal of one hierarchical level being used as a starting point in the search in the video signal with the next-greater bandwidth of the next-higher hierarchical level, and the video signals on a lower hierarchical level being sub-sampled with a lower sampling rate than on a higher hierarchical level, characterized in that the vector determined after the first search step with a low-pass-filtered video signal is used as the starting point for the search on the next-higher hierarchical level, and in that on the last hierarchical level the search step is carried out using the unfiltered video signal.

2. Method according to Claim 1, characterized in that, in a search with three video signals with different bandwidths, in the case of the video signal with the lowest bandwidth a search is performed with an offset of +/- four image elements in the vertical and/or horizontal direction, in that in the case of the video signals with medium bandwidths a search is performed with an offset of +/- two image elements in the horizontal and/or vertical direction, and in that in the case of the video signal with the highest bandwidth the search is performed with an offset of +/- one image element in the horizontal and/or vertical direction.

3. Method according to Claim 1 or 2, characterized in that the video signal is fed to a first and a second low-pass-filter subsampler combination with different bandwidths and sampling rates (22, 23), in that the outputs of the low-pass-filter subsampler combination are respectively fed directly and via a first and a second memory (24, 25) to a first and a second comparison device (26, 27), in that a third memory (29) and a third comparison device (28) are provided for the non-filtered video signal, and in that an output of the first comparison device (26) is connected to the input of the second comparison device (27) and an output of the second comparison device (27) is connected to an input of the third comparison device (28), and in that the output (30) of the circuit is formed by the output of the third comparison device (28).

## Revendications

1. Procédé d'évaluation des mouvements d'une suite d'images, avec des mémoires d'image pour les signaux vidéo créés lors de la prise d'une image, et soumis alors à un codage par blocs avec réduction de données selon plusieurs étapes de recherche, et dans chaque étape de recherche, on décale chaque fois d'un bloc selon différents vecteurs et comparaison avec les blocs de comparaison d'une image précédente dans le champ de recherche, on détermine le vecteur conduisant à la plus faible déviation, puis on filtre par un filtre passe-bas, des signaux vidéo pour la recherche hiérarchique avec des largeurs de bande différentes et on utilise comme point de départ un vecteur obtenu dans un plan hiérarchique à partir d'un signal vidéo filtré en passe-bas, pour la recherche dans le signal vidéo avec des largeurs de bande la plus grande suivante, du plan hiérarchique d'ordre supérieur, et on sous-détecte les signaux vidéo dans un plan hiérarchique plus bas, avec une vitesse de détection plus faible que dans un plan hiérarchique plus élevé, caractérisé en ce qu'on prend le vecteur obtenu après la première étape de recherche, à partir d'un signal vidéo filtré en passe-bas, et pris comme point de départ pour la recherche dans le plan hiérarchique d'ordre supérieur et dans le dernier plan hiérarchique, on effectue l'étape de recherche en utilisant le signal vidéo non filtré.

2. Procédé selon la revendication 1, caractérisé en ce qu'à la recherche avec trois signaux vidéo pour des largeurs de bande différentes on effectue une recherche avec un décalage de +/- quatre éléments-image dans la direction verticale et/ou dans la direction horizontale,, pour le signal vidéo de largeur de bande la plus faible et pour les signaux vidéo de largeur de bande moyenne, on effectue une recherche avec un décalage de +/- deux éléments-image dans la direction horizontale et/ou dans la direction verticale et en ce que pour le signal vidéo correspondant à la largeur de bande la plus élevée, on fait une recherche avec un décalage de +/- un élément-image dans la direction horizontale et/ou dans la direction verticale.

3. Procédé selon la revendication 1 ou 2, caractérisé en ce que le signal vidéo est appliqué à une première et une seconde combinaison de filtres passe-bas/sous-détecteurs à largeur de bande et vitesse de détection différente (22, 23), les sorties de cette combinaison de filtres passe-bas/sous-détecteurs étant appliquées directement et par l'intermédiaire d'une première et d'une seconde mémoire (24, 25) à une première et une seconde installation de comparaison (26, 27), une troisième mémoire (29) et une troisième installation de comparaison (28) étant prévues pour le signal vidéo non filtré et en ce qu'une sortie de la première installation de comparaison (26) est reliée à l'entrée de la seconde installation de comparaison (27) et une sortie de la seconde installation de comparaison (27) est reliée à une entrée de la troisième installation de comparaison (28) et la sortie (30) du circuit est formée par la sortie de la troisième installation de comparaison.
